# EUROPEAN PATENT SPECIFICATION

(11) **EP 1 907 776 B1**
(45) Date of publication and mention of the grant of the patent: **14.02.2018**
(21) Application number: 06780163.9
(22) Date of filing: 21.07.2006
(51) Int. Cl.: F25D 25/02, F16C 29/04, A47B 88/437, F25D 23/06

(54) **A COOLING DEVICE**
KÜHLVORRICHTUNG
DISPOSITIF REFRIGERANT

(30) Priority: 22.07.2005 TR 200502902
(43) Date of publication of application: 09.04.2008
(73) Proprietor: Arçelik Anonim Sirketi, 34950 Istanbul (TR)
(72) Inventor: CELIK, Ridvan Kadir, Tuzla, 34950 Istanbul (TR); BAHTIYAR, Sezgin, Tuzla, 34950 Istanbul (TR)
(86) International application number: PCT/IB2006/052506
(87) International publication number: WO 2007/010500

(56) References cited:
- DE-A1- 2 701 712
- GB-A- 803 741
- GB-A- 1 109 713
- US-A- 3 375 051
- US-A- 4 620 801
- US-A- 5 597 216
- US-A- 5 918 959
- US-B1- 6 325 473

## Description

The present invention relates to a cooling device comprising drawers with enhanced ease of utilization.

When food and/or beverages are desired to be stored in the drawers of the cooling devices, the drawer is pulled out of the body and it is pushed into the body after the desired items are stored. The user can be strained when pulling and pushing the drawer particularly when it is full. In state-of-the-art applications, rollers on which the drawer slides are utilized for providing ease of movement.

In the current state-of-the-art, in US6325473, DE2701712 and GB751838, rollers facilitating the movement of the drawers are described.

In another state-of-the-art, in US5918959, drawers that can be easily moved by means of rollers are described.

The aim of the present invention is to design a cooling device comprising one or more rollers, easily mountable on the body, facilitating the movement of the drawers positioned on them.

The cooling device designed to fulfill the objectives of the present invention is explicated in the first claim, whereas the other features are explicated in the dependent claims.

The present invention is about rollers and a casing that are mounted on the body, in the casing housing in front of the rails by only one fixing element. The rollers and the casing assembled in a housing on the body facilitate the attachment and detachment of the drawers and the shelves positioned on them.

With the present invention, a single piece casing, a hollow cylindrical shaft, having parallel surfaces for being attached and to avoid rotating, and rollers positioned on the shaft such that they can rotate around the central axis of the shaft, are fixed into the casing housing by only one fixing element. With this embodiment, the roller can rotate clockwise and counterclockwise around the shaft without being jammed and the casing can be fixed to the cooling device body such that it is immovable in any direction by means of the casing housing. With this embodiment that enables an inexpensive and easy assembly, the drawers on the rollers can easily be moved, and also the loads effecting on the rollers and the casing due to the drawers are prevented from harming the rollers and the casing.

The cooling device designed to fulfill the objectives of the present invention is illustrated in the attached figures, where:

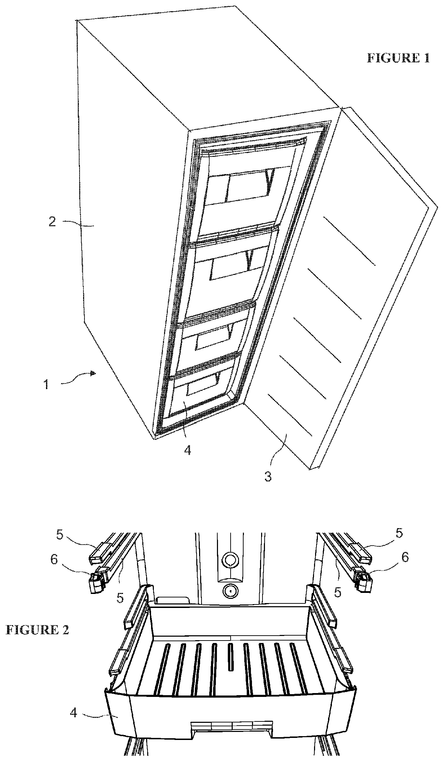

Figure 1 - is the perspective view of a cooling device comprising more than one drawer.
Figure 2 - is the perspective view of a cooling device comprising a drawer positioned on rails.

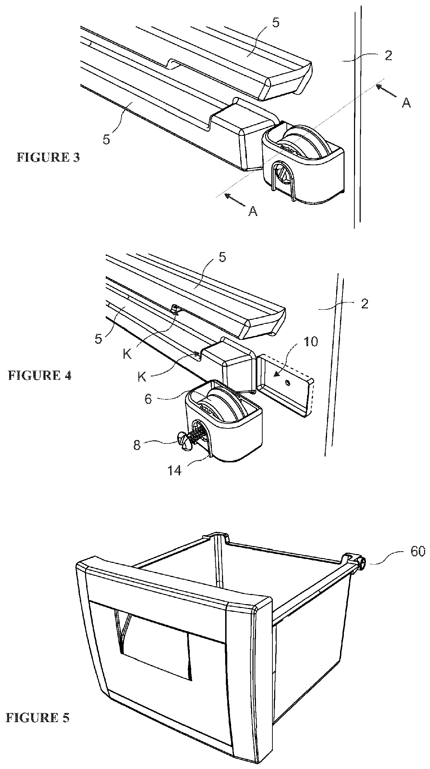

Figure 3 - is the perspective view of a roller, a casing and a fixing element fixed in a casing housing in front of the rails.
Figure 4 - is the perspective view of a roller, a casing and a fixing element dismounted from a casing housing in front of the rails.
Figure 5 - is the perspective view of a drawer.

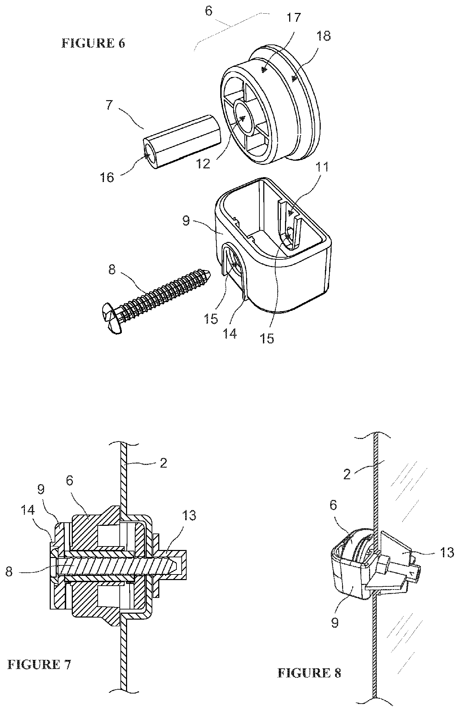

Figure 6 - is the perspective view of a shaft, a roller, a casing and a fixing element.
Figure 7 - is the AA sectional view of the roller group.
Figure 8 - is the perspective view of a roller and a casing mounted on the cabin by means of a support element.

The elements shown in the figures are numbered as follows:
1. Cooling device
2. Cabin
3. Door
4. Drawer
5. Rail
6. , 60. Roller
7. Shaft
8. Fixing element
9. Casing
10. Casing housing
11. Shaft rail
12. Shaft housing
13. Support element
14. Protector
15. Mounting hole
16. Shaft hole
17. Guide
18. Contact surface

The cooling device (1) of the present invention comprises a cabin (2) wherein food and beverages are stored, one or more doors (3) providing access to inside of the cabin (2), one or more drawers (4) inside the cabin (2) in which food and beverages are stored, more than one rail (5) situated opposite each other on the side surfaces of the cabin (2) on which the drawer (4) slides, at least one roller (6) that facilitates the movement of the drawer (4) situated on it, a shaft (7) that provides the rotation of the roller (6) around itself, a casing (9) that houses the roller (6) situated inside, protecting it from outside effects, a casing housing (10) situated on the cabin (2), just in front of the rail (5) inside which the casing (9) is positioned, and a fixing element (8) that provides an inexpensive and easy mounting of the casing (9), the shaft (7) and the roller (6) all at once.

In a preferred embodiment of the present invention, by utilizing a single piece casing (9) shaped as a quadrilateral pipe, with two open ends and rounded corners, the roller (6) is housed from both sides by the central axis of the shaft (7) and is also protected from possible outside elements. The drawer (4) can be easily moved by exerting a small force on the roller (6) that protrudes from the open ends of the casing (9). Not only the roller (6), situated on the shaft (7) in such a manner that it would not be displaced or jammed and that its rotation is not restrained , is fixed in the casing (9) by means of the shaft (7) but also the casing (9) is fixed in the casing housing (10) that is shaped as a quadrilateral prism matching the shape of the casing (9), having rounded corners, with one side open, the others formed by the inner surface of the cabin (2) (8) in a manner immovable in any direction, by means of only one fixing element.

In a preferred embodiment of the present invention, the roller (6) comprises a shaft housing (12) at its center inside which the shaft (7) is inserted.

In a preferred embodiment of the present invention, the cooling device (1) comprises a support element (13), behind the casing housing (10), on the inner surface of the cabin (2) unseen by the user, that provides the fixing of the casing (9) by serving as a nut for the fixing element (8).

In a preferred embodiment of the present invention, the shaft (7) comprises a cylindrical outer surface for facilitating the rotation of the roller (6) around itself without being jammed, two opposite parallel and planar surfaces formed on the outer surface for being fixed into the casing (9) and a shaft hole (16) in the center so as to join both ends of the shaft (7) inside which the fixing element (8) is inserted.

In this embodiment of the present invention, the casing (9) comprises at least two shaft rails (11) situated on its opposite sides, having an almost equal width with the distance between the parallel planar surfaces of the shaft (7), inside which the flat surfaces of the shaft (7) are fixed, at least one mounting hole (15) inside the shaft rail (11) on its opposite sides, in which the fixing element (8) is inserted, and at least one protector (14) that surrounds the head of the fixing element (8), hiding the head of the fixing element (8) and preventing the head of the fixing element (8) from harming the user.

In this embodiment of the present invention, first the shaft (7) is positioned in the shaft housing (12) and then the shaft (7) and the roller (6), assembled to each other, are positioned in the shaft rail (11) by its own weight so that the flat parallel surfaces of the shaft (7) are inserted in the shaft rail (11) such that they are opposite the mounting hole (15) of the shaft housing (12), and the fixing element (8) is inserted through the mounting hole (15), the shaft hole (16) fixing the casing (9), the shaft (7) and the roller (6) on the cabin (2) such that the casing (9) is seated in the casing housing (10) by means of the support element (13). No matter how much the fixing element (8) is tightened, it prevents the jamming of the roller (6) situated on the shaft (7) and the roller (6) can easily rotate around the shaft (7) in the clockwise or counterclockwise direction.

With this embodiment of the present invention, only one fixing element (8) provides the fixing of the shaft (7) and the roller (6) after being positioned in the shaft rail (11) so as to be opposite the mounting hole (15) of the shaft housing (12), by being inserted through the mounting hole (15) and the shaft hole (16), and the roller (6) being situated on the shaft (7) in such a manner that it would not be displaced, jammed or-restrained in its rotation is fixed in the casing (9) by means of the shaft (7) and the casing (9) is fixed in the casing housing (10) and on the cabin (2) in an immovable manner by means of the support element (13) all at the same time.

In an example not part of the present invention, at least two rails (5) are utilized, positioned one above the other, situated oppositely on the side surfaces of the cabin (2), in between which the drawer (4) slides. The drawer (4) slides on the rail (5) at the bottom, and the steps (K) on the rails (5) prevent the unwanted dislocation of the drawer (4) from the rails (5). When the drawer (4) is to be pulled out of the cabin (2), it can be done by providing it to cross over the step (K) and pulling out of the cabin (2).

In the preferred embodiment of the present invention, the drawer (4) comprises at least two rollers (60), situated oppositely at the rear top part of its two side surfaces that facilitate the movement of the drawer (4) by rolling on the rail (5).

In the preferred embodiment of the present invention a screw is utilized as the fixing element (8).

In an embodiment of the present invention, the roller and the shaft (7) are produced as a single piece and are housed in the casing (9).

In an embodiment of the present invention, while the side surfaces of the cabin (2) are shaped to be formed, the casing housing (10) is formed in matching shape to the casing (9) by being caved in without harming the inner surface of the cabin (2).

In another preferred embodiment of the present invention, the roller (6) comprises a contact surface (18) on which the drawer (4) rests and a guide (17) next to the contact surface (18) having the shape and position to provide the pulling and pushing movement of the drawer (4) to be in the desired direction.

With the present invention, the casing (9) and the roller (6) can be inexpensively fixed to the cabin (2) in a short period of time by utilizing only one fixing element (8). Since the casing (9), the shaft (7) and the roller (6) are assembled in the casing housing (10), the sides of the casing housing (10) prevent the casing (8) from moving around the fixing element (8) in any direction. Thus, by utilizing the fixing element (8), assembly can be carried out with the least number of parts. Furthermore, the roller (6) is protected by the casing (8) and can easily rotate clockwise or counterclockwise around the cylindrical outer shape of the shaft (7) that is fixed unrotatably between the two opposite sides of the casing (8). Consequently, the roller (6) can rotate on the shaft (7) without being jammed in spite of the forces and moments applied on the roller (6) by the drawer (4).

## Claims

1. A cooling device (1) comprising a cabin (2) wherein food and beverages are stored, one or more doors (3) providing access to the inside of the cabin (2), one or more drawers (4) inside the cabin (2) in which food and beverages are stored, more than one rail (5) situated opposite each other on the side surfaces of the cabin (2) on which the drawer (4) slides, **and characterized by** at least one roller (6) that facilitates the movement of the drawer (4) situated on it, a shaft (7) that provides the rotation of the roller (6) around itself, a casing (9) that houses the roller (6) situated inside, protecting it from outside effects, a casing housing (10) situated on the cabin (2) and in front of the rail (5), and provided as a recess in the inner wall of the cabin (2) without harming the inner surface of the cabin (2), which casing housing (10) is in matching shape to the casing (9) and, inside which the casing (9) is positioned, and a fixing element (8) that provides the mounting of the casing (9), the shaft (7) and the roller (6) to the casing housing (10) all at once.

2. A cooling device (1) according to Claim 1, **characterized by** a shaft (7) comprising a cylindrical outer surface for facilitating the rotation of the roller (6) around without being jammed, two opposite parallel and planar surfaces formed on the outer surface for being fixed into the casing (9) and a shaft hole (16) in the center so as to join both ends of the shaft (7) inside which the fixing element (8) is inserted.

3. A cooling device (1) according to Claim 2, **characterized by** a casing housing (10) comprising at least two shaft rails (11) situated on its opposite sides, having an almost equal width with the distance between the parallel planar surfaces of the shaft (7), inside which the flat surfaces of the shaft (7) are fixed in, at least one mounting hole (15) inside the shaft rail (11) situated on its opposite sides, into which the fixing element (8) is inserted, and at least one protector (14) that surrounds the head of the fixing element (8).

4. A cooling device (1) according to any one of the above claims, **characterized by** a roller (6) comprising a shaft housing (12) at its center, inside which the shaft (7) is inserted.

5. A cooling device (1) according to Claim 3 or 4, **characterized by** a fixing element (8) that provides the fixing of the shaft (7) and the roller (6) after being positioned in the shaft rail (11) so as to be opposite the mounting hole (15) of the shaft housing (12), by being inserted through the mounting hole (15) and the shaft hole (16), and the roller (6) being situated on the shaft (7) in such a manner that it would not be displaced, jammed or restrained in its rotation, is fixed in the casing (9) by means of the shaft (7) and the casing (9) is fixed in the casing housing (10) and on the cabin (2) in an immovable manner by means of the support element (13) all at the same time.

6. A cooling device (1) according to any one of the above claims, **characterized by** a single piece casing (9) shaped like a quadrilateral pipe with rounded corners, and two open ends, that provide the roller (6) to be housed from both sides by the central axis of the shaft (7) and also to be protected from possible outside elements.

7. A cooling device (1) according to any one of the above claims, **characterized by** a casing housing (10) shaped as a quadrilateral prism that matches the shape to the casing (9), with rounded corners, one side being open and the others formed by the inner surface of the cabin (2).

8. A cooling device (1) according to any one of the above claims, **characterized by** a roller (6) comprising a contact surface (18) on which the drawer (4) rests and a guide (17) next to the contact surface (18) having the shape and position to provide the pulling and pushing movement of the drawer (4) to be in the desired direction.

9. A cooling device (1) according to any one of the above claims, **characterized by** a support element (13), behind the casing housing (10), on the inner surface of the cabin (2) unseen by the user that provides the fixing of the casing (9) by serving as a nut for the fixing element (8).

## Patentansprüche

1. Ein Kühlgerät (1) bestehend aus einer Kabine (2) wo Nahrungsmittel und Getränke gelagert werden, einer oder mehreren Türe (3), die den Zugang zum Innern der Kabine (2) versorgen, einer oder mehreren Schubladen (4) im Innern der Kabine (2), wo Nahrungsmittel und Getränke gelagert werden, mehr als einer Schiene (5) hingelegt gegeneinander auf den seitlichen Oberflächen der Kabine (2), worauf die Schublade (4) rutscht, und **gekennzeichnet dadurch, daß** mindestens eine Laufrolle (6) erleichtert die Bewegung der Schublade (4), die darauf hingesetzt ist, ein Schaft (7), der die Rotation der Laufrolle (6) um sich selbst sicherstellt, eine Verschalung (9), die die Laufrolle (6), die im Innern hingesetzt ist, umhüllt und sie von Außeneffekte schützt, ein Verschalungsgehäuse (10) hingesetzt auf die Kabine (2) und vor der Schiene (5), und geliefert als eine Vertiefung im inneren Wand der Kabine (2) ohne die innere Oberfläche der Kabine (2) zu beschädigen wo das Verschalungsgehäuse (10) in Figur mit der Verschalung (9) übereinstimmt und, wo die Verschalung (9) positioniert ist, und ein Befestigungselement (8) stellt sicher die Montage des Gehäuse (9), des Schafts (7) und der Laufrolle (6) zum Verschalungsgehäuse (10) auf einmal.

2. Ein Kühlgerät (1) nach Anspruch 1, **gekennzeichnet durch** einen Schaft (7) bestehend aus einer zylindrischen Außenfläche für Erleichterung der Rotation der Laufrolle (6), ohne blockiert zu werden, zwei gegenüberliegende parallele und ebene Flächen geformt auf der äußeren Oberfläche für Befestigung auf das Gehäuse (9) und einem Schaftloch (16) im Zentrum, um beide Enden des Schafts (7) zu vereinigen, wohin das Befestigungselement (8) eingefügt ist.

3. Ein Kühlgerät (1) nach Anspruch 2, **gekennzeichnet durch** ein Verschalungsgehäuse (10) bestehend aus mindestens zwei Schaftschienen (11), die auf seine gegenüberliegenden Seiten hingesetzt ist, mit einer beinahe gleichen Weite mit der Distanz zwischen den parallel ebenen Flächen des Schafts (7), wo ebene Flächen des Schafts (7) fixiert sind, mindestens ein Montageloch (15) im Innern der Schaftschiene (11) hingesetzt auf seine gegenüberliegenden Seiten, wo das Befestigungselement (8) eingefügt ist, und mindestens ein Beschützer (14), der den Kopf des Befestigungselements (8) umgibt.

4. Ein Kühlgerät (1) nach den vorhergehenden Ansprüche, **gekennzeichnet durch** eine Laufrolle (6) bestehend aus einem Wellengehäuse (12) in ihrem Zentrum, wohin der Schaft (7) eingefügt ist.

5. Ein Kühlgerät (1) nach Ansprüche 3 oder 4, **gekennzeichnet durch** ein Befestigungselement (8), das versorgt die Befestigung des Schafts (7) und der Laufrolle (6) nachdem sie in Schaftschienen (11) positioniert sind, sodaß sie entgegengesetzt zum Montageloch (15) des Schaftgehäuse (12) sind, mittels Einfügung durch das Montageloch (15) und Schaftloch (16), und die Laufrolle (6) ist hingesetzt auf den Schaft (7) in einer Art und Weise, sodaß sie nicht verschoben, blockiert oder unterdrückt wird in ihrer Rotation, ist fixiert im Gehäuse (9) durch den Schaft (7) und das Gehäuse (9) ist fixiert im Verschalungsgehäuse (10) und in einer Kabine (2) in einer unbeweglichen Art und Weise durch das Befestigungselement (13) alle gleichzeitig.

6. Ein Kühlgerät (1) nach den vorhergehenden Ansprüche, **gekennzeichnet durch** ein einziges Teilgehäuse (9) gebildet als eine vierseitige Pumpe mit gerundeten Ecken, und zwei offenen Enden, die sicherstellen, daß die Laufrolle (6) umhüllt wird von beiden Seiten durch die zentrale Achse des Schafts (7) und auch beschützt wird von möglichen Außenelemente.

7. Ein Kühlgerät (1) nach den vorhergehenden Ansprüche, **gekennzeichnet durch** ein Verschalungsgehäuse (10) gebildet als ein viereckiges Prisma, das übereinstimmt mit der Figur der Verschalung (9), mit gerundeten Ecken, eine Seite ist offen und die anderen sind gebildet von innerer Oberfläche der Kabine (2).

8. Ein Kühlgerät (1) nach den vorhergehenden Ansprüche, **gekennzeichnet durch** eine Laufrolle (6) bestehend aus einer Berührungsfläche (18) worauf die Schublade (4) beruht und einem Führer (17) neben Berührungsfläche (18) mit der Figur und Position, um sicherzustellen, daß die Ziehe- und Schiebebewegung der Schublade (4) in gewünschter Richtung sind.

9. Ein Kühlgerät (1) nach den vorhergehenden Ansprüche, **gekennzeichnet durch** ein Unterstützungselement (13), hinter dem Verschalungsgehäuse (10), auf der inneren Oberfläche der Kabine (2) ungesehen vom Verwender, das die Fixierung der Verschalung (9) sicherstellt durch Bedienung als eine Schraubenmutter für das Befestigungselement (8).

## Revendications

1. Dispositif de refroidissement (1) comprenant une cabine (2) dans laquelle sont stockés des aliments et des boissons, une ou plusieurs portes (3) donnant accès à l'intérieur de la cabine (2), un ou plusieurs tiroirs (4) dans la cabine (2) dans lesquels sont stockés des aliments et des boissons, plus d'un rail (5) situé en regard l'un de l'autre sur les surfaces latérales de la cabine (2) sur lesquelles coulisse le tiroir (4), et **caractérisé par** au moins un rouleau (6) qui facilite le mouvement du tiroir (4) situé sur celui-ci, un arbre (7) assurant la rotation du rouleau (6) sur lui-même, un boîtier (9) qui loge le rouleau (6) situé à l'intérieur, le protégeant des effets extérieurs, un boîtier logeant (10) situé sur la cabine (2) et devant le rail (5), et prévu comme évidement dans la paroi interne de la cabine (2) sans nuire à la surface intérieure de la cabine (2), lequel boîtier logeant (10) a forme complémentaire avec le boîtier (9) et, à l'intérieur duquel est positionné le boîtier (9), et un élément de fixation (8) assurant le montage du boîtier (9), l'arbre (7) et le rouleau (6) au boîtier logeant (10) d'un coup.

2. Dispositif de refroidissement (1) selon la revendication 1, **caractérisé par** un arbre (7) comprenant une surface extérieure cylindrique pour faciliter la rotation du rouleau (6) sans être coincé, deux surfaces opposées parallèles et planaires formées sur la surface externe pour étant fixé dans le boîtier (9) et un trou d'arbre (16) au centre de manière à joindre les deux extrémités de l'arbre (7) à l'intérieur desquelles l'élément de fixation (8) est inséré.

3. Dispositif de refroidissement (1) selon la revendication 2, **caractérisé par** un boîtier de logeant (10) comprenant au moins deux rails d'arbre (11) situés sur ses côtés opposés, ayant une largeur presque égale à la distance entre les surfaces planes parallèles de l'arbre (7) à l'intérieur duquel sont fixées les surfaces planaires de l'arbre (7), au moins un trou de montage (15) à l'intérieur du rail d'arbre (11) situé sur ses côtés opposés, dans lequel est inséré l'élément de fixation (8) et au moins un protecteur (14) entourant la tête de l'élément de fixation (8).

4. Dispositif de refroidissement (1) selon l'une quelconque des revendications précédentes, **caractérisé par** un rouleau (6) comprenant un logement d'arbre (12) en son centre, à l'intérieur duquel l'arbre (7) est inséré.

5. Dispositif de refroidissement (1) selon la revendication 3 ou 4, **caractérisé par** un élément de fixation (8) qui assure la fixation de l'arbre (7) et du rouleau (6) après son positionnement dans le rail d'arbre (11) de manière à être en face du trou de montage (15) du boîtier d'arbre (12), en étant inséré à travers le trou de montage (15) et le trou d'arbre (16), et le rouleau (6) étant situé sur l'arbre (7) de manière à ne pas être déplacé, coincé ou retenu dans sa rotation, est fixé dans le boîtier (9) au moyen de l'arbre (7) et le boîtier (9) est fixé dans le boîtier longeant (10) et sur le cabine (2) d'une manière inamovible au moyen de l'élément de support (13) en même temps.

6. Dispositif de refroidissement (1) selon l'une quelconque des revendications précédentes, **caractérisé par** un boîtier monobloc (9) en forme de tube quadrilatéral avec des coins arrondis, et deux extrémités ouvertes, qui permettent au rouleau (6) d'être logé à la fois côtés par l'axe central de l'arbre (7) et également à protéger des éventuels éléments extérieurs.

7. Dispositif de refroidissement (1) selon l'une quelconque des revendications précédentes, **caractérisé par** un boîtier logeant (10) en forme de prisme quadrilatère qui correspond à la forme du boîtier (9), avec des coins arrondis, un côté étant ouvert et les autres formé par la surface intérieure de la cabine (2).

8. Dispositif de refroidissement (1) selon l'une quelconque des revendications précédentes, **caractérisé par** un rouleau (6) comprenant une surface de contact (18) sur laquelle repose le tiroir (4) et un guide (17) à côté de la surface de contact (18) ayant la forme et la position pour que le mouvement de traction et de poussée du tiroir (4) soit dans la direction souhaitée.

9. Dispositif de refroidissement (1) selon l'une quelconque des revendications précédentes, **caractérisé par** un élément de support (13), derrière le boîtier logeant (10), sur la surface interne de la cabine (2) invisible de l'utilisateur qui assure la fixation du boîtier (9) en servant d'écrou à l'élément de fixation (8).
